(19) Europäisches Patentamt
European Patent Office
Office européen des brevets

(11) EP 4 130 813 A1

(12) EUROPEAN PATENT APPLICATION
published in accordance with Art. 153(4) EPC

(43) Date of publication:
08.02.2023 Bulletin 2023/06

(51) International Patent Classification (IPC):
G02B 5/30 (1968.09)          G02F 1/1335 (1990.01)
G02F 1/13363 (2000.01)       G02B 27/28 (1968.09)

(21) Application number: 21778904.9

(22) Date of filing: 26.03.2021

(52) Cooperative Patent Classification (CPC):
G02B 5/30; G02B 27/28; G02F 1/1335;
G02F 1/13363

(86) International application number:
PCT/JP2021/013051

(87) International publication number:
WO 2021/200722 (07.10.2021 Gazette 2021/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.03.2020 JP 2020064604

(71) Applicant: Nitto Denko Corporation
Ibaraki-shi, Osaka 567-8680 (JP)

(72) Inventors:
• TAKEMOTO, Hiroyuki
  Ibaraki-shi, Osaka 567-8680 (JP)
• YAGINUMA, Hironori
  Ibaraki-shi, Osaka 567-8680 (JP)
• YAEGASHI, Masahiro
  Ibaraki-shi, Osaka 567-8680 (JP)

(74) Representative: Hoffmann Eitle
Patent- und Rechtsanwälte PartmbB
Arabellastraße 30
81925 München (DE)

(54) PEEKING PREVENTION SYSTEM, PEEKING PREVENTION METHOD, AND WINDOW MEMBER

(57) A peeking prevention system has: a display device having, on a front surface of a display screen, a first polarization layer that has a first absorption axis parallel to a first direction; and a room partition that partitions a space in which a display is provided by the display device from a surrounding space, the room partition having a translucent part that makes it possible to see into the space, the translucent part including a transparent substrate and a second polarization layer that is positioned on the space side of the transparent substrate and that has a second absorption axis parallel to a second direction, wherein: the system furthermore has a phase contrast film that is positioned on the front surface of the first polarization layer, or on the space side of the second polarization layer; the phase contrast layer has a delay axis parallel to a third direction that is orthogonal to the first direction or parallel to the second direction; and transparency is reduced when the display screen is viewed through the translucent part from an oblique angle for which the azimuth angle of the display screen is 45° and the angle of elevation is 45°.

FIG.1

**Description**

## TECHNICAL FIELD

The present invention relates to a system and method which can prevent displaying using polarized light from being peeked at by a stranger from the outside, and a window piece for use therewith.

## BACKGROUND ART

Display devices that use polarized light to perform displaying, such as liquid crystal display devices, are widely used. Large-sized display devices are often installed in conference rooms as monitors for presentation or video conferencing purposes, for example.

On the other hand, the use of open conference rooms that provide a sense of spatial openness is becoming more widespread. For example, the wall (or partition) of a conference room facing a walkway may be made of a glass panel (or an acrylic panel) to provide a sense of openness because of its transparency. While transparency of the wall provides a sense of openness, it can be a problem if an outside stranger peeks at the information that is being displayed on a display device in the conference room. To cope with this situation, for example, a frosted glass or colored panel are used to make the transparent wall opaque at eye level. However, when the transparent wall is partly made opaque in this way, the sense of openness will be compromised.

Patent Document 1 discloses a system where a polarizing filter is placed close to a transparent window, such that the polarizing filter transmits polarized light in a second direction being orthogonal to polarized light in a first direction which is emitted from a display device, thereby preventing the information that is displayed on the display device by using polarized light in the first direction from being seen, while still allowing the inside of the room to be seen through the transparent window.

## CITATION LIST

### PATENT LITERATURE

[Patent Document 1] the specification of USP No. 9885876

## SUMMARY OF INVENTION

### TECHNICAL PROBLEM

However, in the system described in Patent Document 1, a display plane is disposed so as to be parallel and directly opposite to the transparent window, such that information displayed by using polarized light can be prevented from being seen when being viewed in a direction perpendicular to a polarizing filter that is disposed close to the transparent window, but that information displayed by using polarized light can still be seen when being viewed in an oblique direction (from above or below or from right or left) with respect to the polarizing filter (i.e., the window). This issue of peeking from oblique directions, as will be described later in detail, arises from the fact that, when displaying is viewed obliquely with respect to the polarizing filter, the relationship between the direction of the polarized light used for displaying used for displaying and the absorption axis of the polarizing filter (orthogonal to the second direction)is shifted from being parallel.

The present invention has been made in view of the above problems, and an objective thereof is to provide a peeking prevention system, a method of peeking prevention, and a window piece for use therewith that can prevent peeking from oblique directions.

### SOLUTION TO PROBLEM

According to embodiments of the present invention, means for solution as recited in the following Items are provided.

[Item 1]

A peeking prevention system comprising:

a display device including a first polarizing layer on a front side of a display plane, the first polarizing layer having a first absorption axis that is parallel to a first direction; and

a partition to delimit from surroundings a space in which displaying is to be provided by the display device, the partition having a light-transmitting portion through which the inside of the space is viewable,

the light-transmitting portion including a transparent substrate and a second polarizing layer being disposed on a side of the transparent substrate facing the space and having a second absorption axis that is parallel to a second direction, wherein,

the system further comprises a phase film disposed on a front side of the first polarizing layer or a side of the second polarizing layer facing the space;

the phase film has a slow axis that is orthogonal to the first direction or parallel to a third direction, the third direction being parallel to the second direction; and

the display plane has an azimuth angle of 45°, and reduces a transmittance of a case where the display plane is viewed through the light-transmitting portion from an oblique direction with an elevation angle of 45°.

[Item 2]

The peeking prevention system of Item 1, wherein,

in a plan view that is orthogonal to the oblique direction, when a smaller angle and a larger angle emerge as a result of the first absorption axis intersecting the second absorption axis, a direction bisecting the smaller angle defines a horizontal polarization axis and a direction bisecting the larger angle defines a vertical polarization axis,

Stokes parameters S1 and S3, defining a polarization state of linearly polarized light having been emitted from the display plane and transmitted through the phase film but before being incident on the second polarizing layer, satisfy the relationships:

$$0.25 < S1 < 0.9;$$

and

$$-0.4 < S3 < 0.4.$$

[Item 3]

The peeking prevention system of Item 1 or 2, wherein a frontal retardation Re that is defined by a product between a thickness and (nx-ny) of the phase film is not less than 200 nm and not more than 300 nm, and an Nz factor defined by (nx-nz)/(nx-ny) of the phase film is not less than -1.0 and not more than 2.0.

[Item 4]

The peeking prevention system of Item 1 or 2, wherein the phase film includes a plurality of phase layers.

[Item 5]

The peeking prevention system of any of Items 1 to 4, wherein one of the first direction and the second direction is the horizontal direction, and the other is the vertical direction.

[Item 6]

The peeking prevention system of Item 5, wherein the first direction is the horizontal direction and the phase film is disposed on the front side of the first polarizing layer.

[Item 7]

The peeking prevention system of Item 5, wherein the second direction is the horizontal direction, and the phase film is disposed on the side of the second polarizing layer facing the space.

[Item 8]

The peeking prevention system of any of Items 1 to 7, wherein,

the display plane and the light-transmitting portion are parallel to the vertical direction; and
an angle made by the display plane and the light-transmitting portion is not less than 30° and not more than 150°.

[Item 9]

The peeking prevention system any of Items 1 to 8, wherein the transmittance is 6% or less.

[Item 10]

The peeking prevention system any of Items 1 to 9, wherein the transmittance is 3% or less.

[Item 11]

A window piece to be provided on a wall of a room, the window piece comprising:

a transparent substrate;
a polarizing layer being disposed on a side of the transparent substrate facing the room, the polarizing layer having an absorption axis that is parallel to the vertical direction or the horizontal direction; and
a phase film disposed on a side of the polarizing layer facing the room, wherein,
in a plan view of an imaginary plane located inside the room as viewed along a line-of-sight direction from outside of the room, when linearly polarized light having a polarization axis that is orthogonal to a horizontal line segment (or a vertical line segment) on the imaginary plane propagates in a direction with an angle $\theta$ greater than 0° emerging between the polarization axis and the absorption axis, the phase film has a birefringence to convert a polarization state of the linearly polarized light so that the polarization axis rotates beyond the absorption axis.

[Item 12]

The window piece of Item 11, wherein an angle by which the phase film rotates the polarization axis of the linearly polarized light beyond the absorption axis is 3 times as large or more and 10 times as large or less than the angle $\theta$.

[Item 13]

The window piece of Item 11 or 12, wherein,

the line-of-sight direction has an incident angle of 45° with respect to the imaginary plane, with a plane of incidence intersecting the horizontal plane at an angle of 45°,
in a plan view that is orthogonal to the line-of-sight direction, when a smaller angle and a larger angle emerge as a result of the absorption axis intersecting the horizontal line segment, a direction bisecting the smaller angle defines a horizontal polarization axis and a direction bisecting the larger angle defines a vertical polarization axis,
Stokes parameters S1 and S3, defining a polarization state of the linearly polarized light having been transmitted through the phase film but before being incident on the polarizing layer, satisfy the relationships:

$$0.25 < S1 < 0.9;$$

and

$$-0.4 < S3 < 0.4.$$

[Item 14]

A method of peeking prevention comprising:

disposing a display device including a first polarizing layer on a front side of a display plane, the first polarizing layer having a first absorption axis that is parallel to a first direction;

disposing a partition to delimit from surroundings a space in which displaying is to be provided by the display device, the partition having a light-transmitting portion through which the inside of the space is viewable, the light-transmitting portion including a transparent substrate and a second polarizing layer being disposed on a side of the transparent substrate facing the space and having a second absorption axis that is parallel to a second direction; and

disposing a phase film at a front side of the first polarizing layer or a side of the second polarizing layer facing the space, the phase film having a slow axis that is orthogonal to the first direction or parallel to a third direction that is parallel to the second direction, thereby reducing a transmittance of a case where the display plane is viewed through the light-transmitting portion from an oblique direction with an elevation angle of 45° when the display plane has an azimuth angle of 45°.

## ADVANTAGEOUS EFFECTS OF INVENTION

According to embodiments of the present invention, a peeking prevention system, a method of peeking prevention, and a window piece for use therewith that can prevent peeking from oblique directions are provided.

## BRIEF DESCRIPTION OF DRAWINGS

[FIG. 1] A schematic diagram showing an example of a peeking prevention system **100** according to an embodiment of the present invention, where a peeking stranger **PP** is also depicted.

[FIG. 2] A schematic diagram showing a relationship between: respective absorption axes **AXr** and **AXf** of a rear polarizing layer **RPL** and a front polarizing layer **FPL** when a liquid crystal display device **LCD** being disposed so that an absorption axis **AXr** of the rear polarizing layer **RPL** is oriented with an azimuth angle $\phi$ in the 45° direction is viewed from the normal direction (i.e., with an elevation angle $\theta_E$ of 90°) relative to the display plane; and the direction of polarized light **PL** used for displaying.

[FIG. 3] A schematic diagram showing a relationship between: the respective absorption axes **AXr** and **AXf** of the rear polarizing layer **RPL** and the front polarizing layer **FPL** when the liquid crystal display device **LCD** being disposed as in FIG. **2** is viewed from a direction with an elevation angle $\theta_E$ at 45° from the display plane; and the direction of polarized light **PL** used for displaying.

[FIG. 4A] A diagram, by using the Poincaré sphere, explaining absence of leakage of light when the liquid crystal display device **LCD** shown in FIG. **2** is viewed from the front.

[FIG. 4B] A diagram, by using the Poincaré sphere, explaining occurrence of leakage of light when the liquid crystal display device **LCD** shown in FIG. **3** is viewed obliquely.

[FIG. 4C] A diagram, by using the Poincaré sphere, explaining an optical compensation for preventing leakage of light when the liquid crystal display device **LCD** shown in FIG. **3** is viewed obliquely.

[FIG. 5] A diagram showing the directions of the absorption axis **AXr** of the rear polarizing layer **RPL,** the absorption axis **AXf** of the front polarizing layer **FPL,** polarized light **PL1,** and polarized light **PL2** in FIG. **4C.**

[FIG. 6] A schematic diagram showing a relationship in the peeking prevention system **100,** when the first polarizing layer **10** disposed on the front side of the display device **10D** is viewed from a direction with an azimuth angle $\phi$ of 45° and an elevation angle $\theta_E$ of 45° through the second polarizing layer **20** disposed on a side of the light-transmitting portion **20W** facing the space **PSS,** between: their absorption axes **AX1** and **AX2;** and directions of the polarized light **PL1** and **PL2** used for displaying.

[FIG. 7] A diagram resulting from rotating FIG. **6** so that the positional relationship between the first polarizing layer **10** and the second polarizing layer **20** corresponds to the positional relationship between the rear polarizing layer **RPL** and the front polarizing layer **FPL** in the liquid crystal display device **LCD** of FIG. **3.**

[FIG. 8] A diagram, by using the Poincaré sphere, explaining an optical compensation for preventing leakage of light when the display plane **10D** is viewed obliquely in the peeking prevention system **100.**

[FIG. 9A] A diagram schematically showing the positioning of a phase film in a peeking prevention system **100A1** of Type A, with a top view on the left and a perspective view on the right.

[FIG. 9B] A diagram schematically showing the positioning of a phase film in a peeking prevention system **100A2** of Type A, with a top view on the left and a perspective view on the right.

[FIG. 9C] A diagram, by using the Poincaré sphere, explaining the action of the phase film in the peeking prevention system **100A1** of Type A.

[FIG. 10A] A diagram schematically showing the positioning of a phase film in a peeking prevention system **100B1** of Type B, with a top view on the left and a perspective view on the right.

[FIG. **10B**] A diagram schematically showing the positioning of a phase film in a peeking prevention system **100B2** of Type B, with a top view on the left and a perspective view on the right.

[FIG. **10C**] A diagram, by using the Poincaré sphere, explaining the action of the phase film in the peeking prevention system **100B1** of Type B.

[FIG. **11A**] A diagram schematically showing the positioning of a phase film in a peeking prevention system **100C1** of Type C, with a top view on the left and a perspective view on the right.

[FIG. **11B**] A diagram schematically showing the positioning of a phase film in a peeking prevention system **100C2** of Type C, with a top view on the left and a perspective view on the right.

[FIG. **11C**] A diagram, by using the Poincaré sphere, explaining the action of the phase film in the peeking prevention system **100C1** of Type C.

[FIG. **12A**] A diagram schematically showing the positioning of a phase film in a peeking prevention system **100D1** of Type D, with a top view on the left and a perspective view on the right.

[FIG. **12B**] A diagram schematically showing the positioning of a phase film in a peeking prevention system **100D2** of Type D, with a top view on the left and a perspective view on the right.

[FIG. **12C**] A diagram, by using the Poincaré sphere, explaining the action of the phase film in the peeking prevention system **100D1** of Type D.

[FIG. **13A**] A diagram schematically showing the positioning of a phase film in a peeking prevention system **100E1** of Type E, with a top view on the left and a perspective view on the right.

[FIG. **13B**] A diagram schematically showing the positioning of a phase film in a peeking prevention system **100E2** of Type E, with a top view on the left and a perspective view on the right.

[FIG. **13C**] A diagram, by using the Poincaré sphere, explaining the action of the phase film in the peeking prevention system **100E1** of Type E.

[FIG. **14**] A diagram, by using the Poincaré sphere, explaining the polarization state in Comparative Example 1 (**C1**) and the action of the phase film in Example 0 (**E0**).

[FIG. **15**] A diagram, by using the Poincaré sphere, explaining the action of the phase films in Example 1 (**E1**) to Example 6 (**E6**).

[FIG. **16**] A diagram, by using the Poincaré sphere, explaining the action of the phase films in Example 7 (**E7**) to Example 12 (**E12**).

[FIG. **17**] A diagram, by using the Poincaré sphere, explaining the action of the phase films in Example 13 (**E13**) to Example 18 (**E18**).

[FIG. **18**] A diagram, by using the Poincaré sphere, explaining the action of the phase films in Example 19 (**E19**) to Example 23 (**E23**).

[FIG. **19**] A map representing Stokes parameters (S1 and S3) for a phase film suitably used for a peeking prevention system according to an embodiment of the present invention and transmittances in oblique directions.

[FIG. **20**] A schematic diagram of a peeking prevention system that was prototyped.

## DESCRIPTION OF EMBODIMENTS

Hereinafter, with reference to the drawings, a peeking prevention system, a method of peeking prevention, and a window piece for use therewith according to embodiments of the present invention will be described. Peeking prevention systems, methods of peeking prevention, and window pieces according to embodiments of the present invention are not limited to what will be illustrated hereinbelow.

In the following description of the present specification, a polarizing layer means a layer that absorbs linearly polarized light, the layer not having any phase difference (retardation); usually, it is composed of a polyvinyl alcohol layer containing iodine, exclusive of any triacetyl cellulose (TAC) layer or the like to protect the polarizing layer. On the other hand, a phase film may include a plurality of phase layers and adhesion layers. As will be described later by way of Examples, a phase film is inclusive of those having two or more phase layers, being respectively represented by different refractive index ellipsoids, that are stacked with an optical adhesive or an optical tackiness agent.

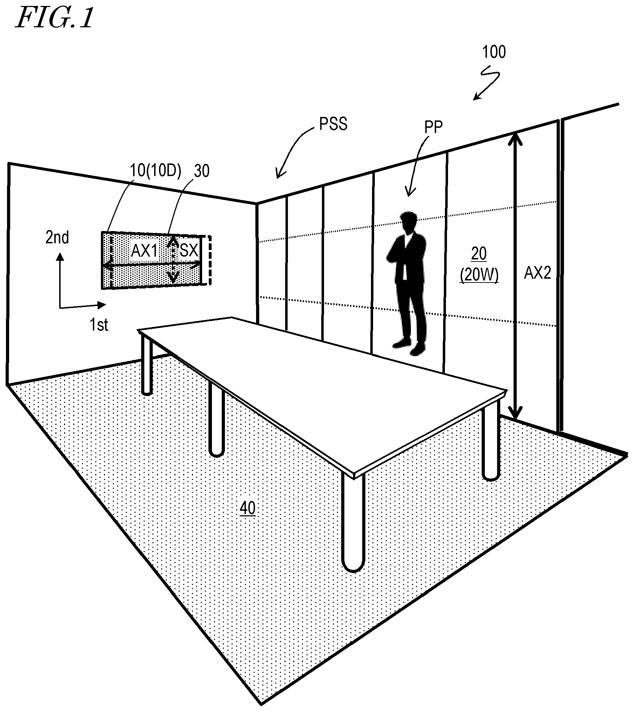

FIG. **1** schematically shows an example of a peeking prevention system **100** according to an embodiment of the present invention. The peeking prevention system **100** is a conference room, for example, where a floor **40** is parallel to the horizontal direction (first direction) and walls are parallel to the vertical direction (second direction). A wall on which the display device **10D** is disposed and a wall **20W** through which the inside of the room is viewable are orthogonal to each other. A peeking prevention system according to an embodiment of the present invention is used for such a typical conference room, although this is not a limitation. In the following description, a "wall" is one form of a "partition"; a "window" is one form of a "light-transmitting portion"; and the entire "wall" or "partition" may be a "light-transmitting portion". A "room (e.g., a conference room)" is one form of a space that is delimited from the surroundings by a partition(s), and does not need to be completely isolated from the surroundings. Hereinafter, a wall, a window, and a light-transmitting portion may all be denoted by the same reference numeral **20W.** The component that composes a "light-transmitting portion" may be referred to as a "window piece".

The peeking prevention system **100** includes: a display device **10D** including a first polarizing layer **10** on a front side of a display plane, the first polarizing layer **10** having a first absorption axis **AX1** that is parallel to a first direction; and a partition to delimit from the surroundings a space (inside of the room) **PSS** in which displaying is to be provided by the display device **10D,** the partition having a light-transmitting portion **20W** through which the inside of the space **PSS** is viewable. The light-transmitting portion **20W** includes: a transparent substrate; and a second polarizing layer **20** being disposed on a side of the transparent substrate facing the space **PSS** and having a second absorption axis **AX2** that is parallel to a second direction. Hereinafter, the display plane may be denoted by the same reference numeral **10D** as the display device.

Note that the first direction and the second direction may be reversed, i.e., the first direction may be the vertical direction and the second direction may be the horizontal direction. In either case, they may be offset respectively by about 5° from the horizontal direction or the vertical direction; even if the first direction and the second direction are offset by about 10° from an orthogonal relationship, the effect of peeking prevention as described below will be obtained. While a configuration for obtaining an effect of peeking prevention in the case where the first direction and the second direction are of an orthogonal relationship will be described herein, configurations for obtaining an effect of peeking prevention in the case where the first direction and the second direction are offset from an orthogonal relationship will be apparent to those skilled in the art based on the disclosure of the present specification. Although a liquid crystal display device having an absorption axis along the horizontal direction will be illustrated as an example, this being widely used for large-sized liquid crystal display devices, this is not a limitation.

The partition in FIG. **1** is a wall being disposed on a side of the space **PSS** facing the walkway, such that the entire partition is composed of the light-transmitting portion **20W**; therefore, the partition may also be denoted by the same reference numeral as the light-transmitting portion **20W.** Without being limited to this, the light-transmitting portion **20W** may just constitute a portion of the partition of a peeking prevention system according to an embodiment of the present invention. The partition does not need to be a wall, but may be any partition that is used for delimiting the space in which the display device provides displaying from the surroundings, the partition including a light-transmitting portion (window). Moreover, the display plane **10D,** i.e., the plane defined by the first polarizing layer **10** and the light-transmitting portion **20W,** i.e., the plane defined by the second polarizing layer **20,** do not need to be orthogonal, but may make an angle of e.g. not less than 30° and not more than 150°. Hereinafter, an example case where the first polarizing layer **10** (display plane **10D**) and the second polarizing layer **20** (window **20W**) are orthogonal will be described.

The peeking prevention system **100** further includes a phase film **30** disposed on the front side of the first polarizing layer **10.** When the direction of the slow axis of the phase film **30** is termed a third direction, this third direction is orthogonal to the first direction, or parallel to the second direction. As will be described later, the phase film **30** may be disposed on a side of the second polarizing layer **20** facing the space **PSS.**

The phase film **30** has an azimuth angle $\phi$ of 45°, for example, and acts to reduce the transmittance of the case where the display plane **10D** is viewed through the light-transmitting portion **20W** from an oblique direction with an elevation angle $\theta_E$ of 45°. When the display plane **10D** is regarded as a clock face, the azimuth angle $\phi$ is 0° at 3 o'clock and reads positive counterclockwise. The elevation angle $\theta_E$ is referenced against a horizontal plane that is perpendicular to the display plane **10D** (0°). With such a phase film **30,** when the display plane **10D** is viewed from an oblique direction (from above or below (elevation angle $\theta_E \neq 0°$) or from right or left (azimuth angle $\phi \neq 0°$) relative to the first polarizing layer **10,** via the second polarizing layer **20** making 30° to 150° with the display plane **10D,** the information displayed thereon can be made difficult to be seen.

In the present specification, the following physical properties or parameters are used to characterize the optical anisotropy of a phase film. Principal refractive indices for three orthogonal axes x, y and z are denoted as nx, ny and nz, where nx≧ny. The thickness of the phase film is denoted as d; a product (nx-ny) ▪ d between (nx-ny) and d is referred to as a frontal retardation Re; and a product (nx-nz) ▪ d between (nx-nz) and d is referred to as a thickness-direction retardation Rth. Rth/Re is referred to as an Nz factor. Moreover, nx>ny=nz defines a positive A plate; nx=ny>nz defines a negative C plate; nz=nx>ny defines negative A plate; and nz>nx=ny defines a positive C plate. A positive C plate may be denoted as +C, whereas a negative C plate may be denoted as -C.

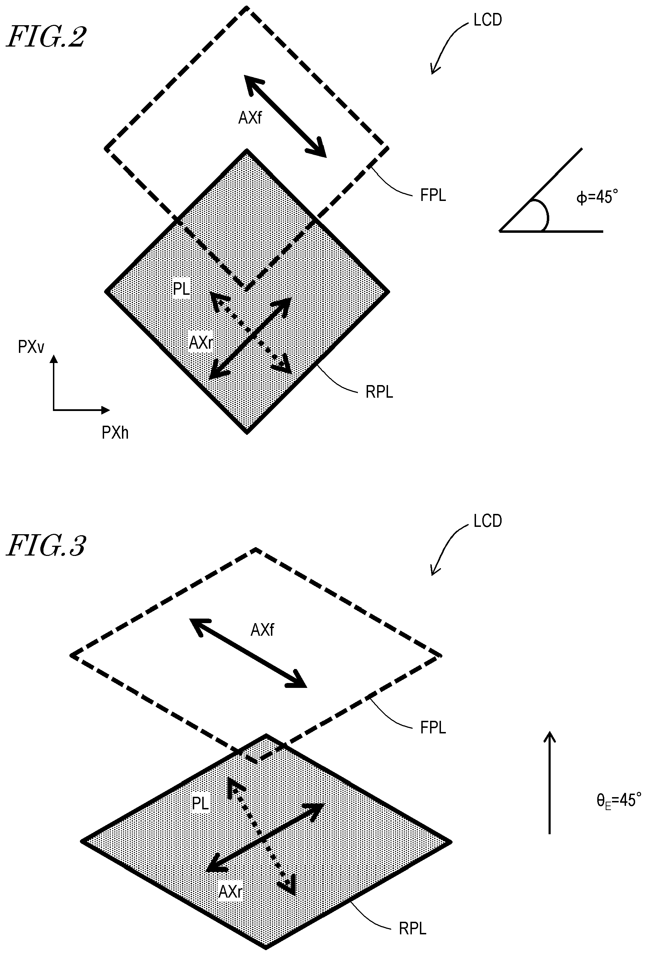

Hereinafter, the problem of being peeked at from an oblique direction will be described by contrasting it with the problem of leakage of light at oblique viewing angles in a liquid crystal display device. First, with reference to FIG. **2** and FIG. **3,** the problem of leakage of light at oblique viewing angles in a liquid crystal display device will be described. The occurrence of leakage of light amounts to being peeked at.

FIG. **2** is a schematic diagram showing a relationship between: respective absorption axes **AXr** and **AXf** of a rear polarizing layer **RPL** and a front polarizing layer **FPL** when a liquid crystal display device **LCD** being disposed so that an absorption axis **AXr** of the rear polarizing layer **RPL** is oriented with an azimuth angle $\phi$ in the 45° direction is viewed from the normal direction (i.e., with an elevation angle $\theta_E$ of 90°) relative to the display plane; and the direction of polarized light **PL** used for displaying. FIG. **3** is a schematic diagram showing a relationship between: the respective absorption axes **AXr** and **AXf** of the rear polarizing layer **RPL** and the front polarizing layer **FPL** when the liquid crystal display device **LCD** being disposed as in FIG. **2** is viewed from a direction with an elevation angle $\theta_E$ at 45° from the display plane; and the direction of polarized light **PL** used for displaying. Note that a "direction of polarized light" means direction in which the electric field of linearly polarized light oscillates, and may also be referred to as a polarization direction or a polarization axis.

As shown in FIG. **2,** the absorption axis **AXr** of the rear polarizing layer **RPL** and the absorption axis **AXf** of the front polarizing layer **FPL** are disposed so as to be orthogonal to each other, where the absorption axis **AXf** of the front polarizing layer **FPL** is often disposed parallel to the horizontal direction (e.g., in vertical alignment modes or lateral field modes). Since the polarized light **PL** that is used for displaying is polarized light having been transmitted through the rear polarizing layer **RPL,** its polarization direction is orthogonal to the absorption axis **AXr** of the rear polarizing layer **RPL.** So long as the viewing is made from the normal direction of the display plane, irrespective of the azimuth angle $\phi$, the direction of the polarized light **PL** and the absorption axis **AXf** of the front polarizing layer **FPL** maintain a parallel relationship, so that leakage of light will not occur.

However, as shown in FIG. **3,** when displaying is viewed at an angle with an elevation angle $\theta_E$ of 45°, the orthogonal relationship between the absorption axis **AXr** of the rear polarizing layer **RPL** and the absorption axis **AXf** of the front polarizing layer **FPL** is lost. Therefore, the direction of polarized light **PL** that is orthogonal to the absorption axis **AXr** of the rear polarizing layer **RPL** is offset from a direction that is parallel to the absorption axis **AXf** of the front polarizing layer **FPL.** As a result of this, when the liquid crystal display device **LCD** is observed from an oblique viewing angle, leakage of light will occur.

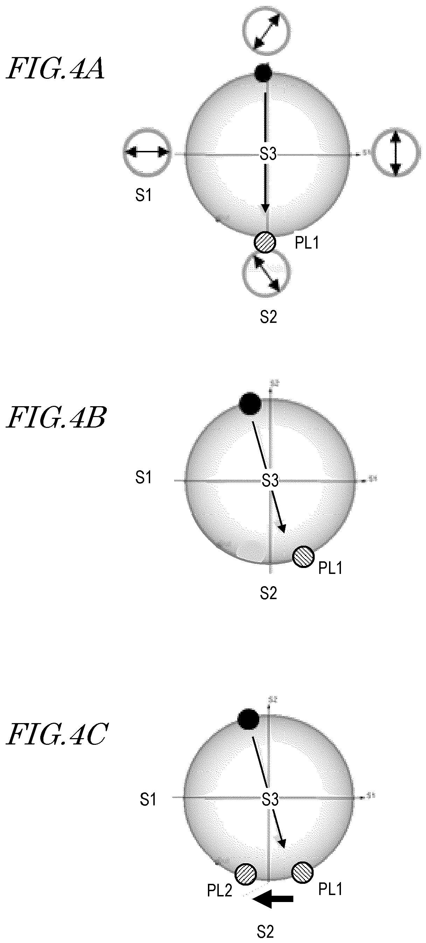

With reference to FIG. **4A to** FIG. **4C,** the above will be described by using the Poincaré sphere. FIG. **4A** is a diagram, by using the Poincaré sphere, explaining the absence of leakage of light when the liquid crystal display device **LCD** shown in FIG. **2** is viewed from the front; and FIG. **4B** is a diagram, by using the Poincaré sphere, explaining occurrence of leakage of light when the liquid crystal display device **LCD** shown in FIG. **3** is viewed obliquely. FIG. **4C** is a diagram, by using the Poincaré sphere, explaining an optical compensation for preventing leakage of light when the liquid crystal display device **LCD** shown in FIG. **3** is viewed obliquely.

First, FIG. **4A** is referred to. When the liquid crystal display device **LCD** is viewed from the front as shown in FIG. **2,** the polarized light **PL1** having been transmitted through the rear polarizing layer **RPL** (whose absorption axis **AXr** is the dark circle in FIG. **4A:** S1=0, S2=-1, S3=0) has a polarization axis that is orthogonal to the absorption axis **AXr** (**PL1**: S1=0, S2=1, S3=0 in FIG. **4A**), and is absorbed by the front polarizing layer **FPL** whose absorption axis **AXf** is orthogonal to the absorption axis **AXr** of the rear polarizing layer **RPL,** thus not being able to be transmitted through the front polarizing layer **FPL.** Note that the Poincaré sphere shown in FIG. **4A** has the axis **PXh** in FIG. **2** as its horizontal polarization axis (S1=1), and has **PXv** as its vertical polarization axis (S1=-1).

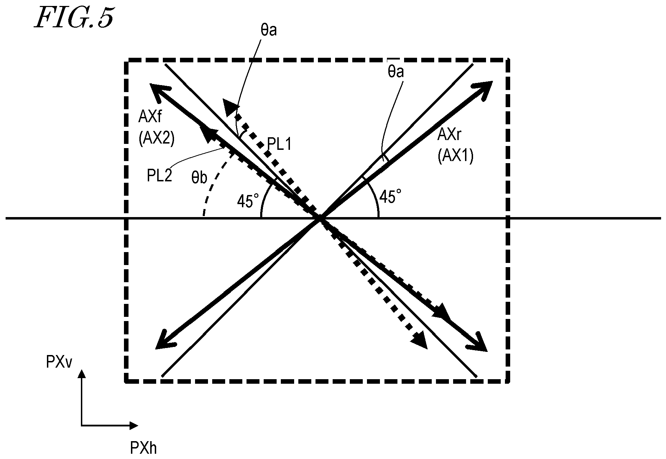

On the other hand, when the liquid crystal display device **LCD** is viewed obliquely as shown in FIG. **3,** the absorption axis **AXr** of the rear polarizing layer **RPL** is offset from the predetermined direction (dark circle in FIG. **4B**). Therefore, the polarized light **PL1** having been transmitted through the rear polarizing layer **RPL** has a polarization axis that is orthogonal to the absorption axis **AXr** (point **PL1** in FIG. **4B:** S1=-0.125, S2=0.992, S3=0.000), no longer being parallel to the absorption axis **AXf** of the front polarizing layer **FPL** (S1=0, S2=1, S3=0). As a result, a portion of the polarized light **PL1** is transmitted through the front polarizing layer **FPL,** resulting in a leakage of light. FIG. **5** schematically shows this angle $\theta a$ of offset. As will be illustrated by some of the simulation results later, the angle $\theta a$ is 3.6°. Note that 3.6° is an angle within a medium having a refractive index of 1.5.

In the optical compensation by the liquid crystal display device **LCD,** as shown in FIG. **4C,** the polarized light **PL1** is converted into polarized light **PL2** (S1=0.125, S2=0.992, S3=0.000), by using a phase film (e.g., a 1/2 wavelength plate having an Nz factor of 0.5). In other words, the polarization direction (polarization axis) of the polarized light **PL1** is rotated in the opposite direction (i.e., such that the polarization direction becomes closer to being horizontal by twice the angle $\theta a$). In other words, in FIG. **5,** $\theta b$ of the polarized light **PL1** is 48.6°, whereas $\theta b$ of the polarized light **PL2** is 41.4°. As a result, the polarization direction of the polarized light **PL2** becomes parallel to the absorption axis **AXf** of the front polarizing layer **FPL,** so that the polarized light **PL2** is absorbed by the front polarizing layer **FPL,** thus not being able to be transmitted through the front polarizing layer **FPL.**

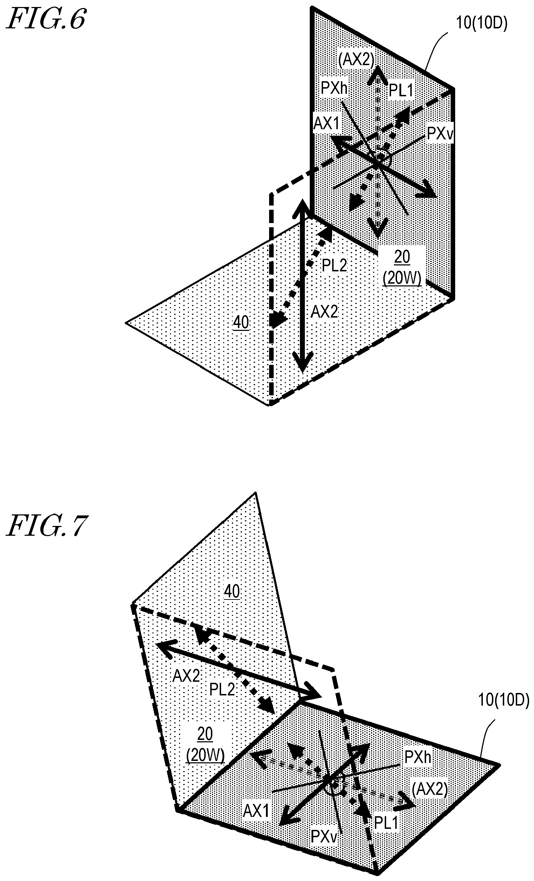

Next, with reference to FIG. **6** to FIG. **8,** leakage of light in the peeking prevention system **100** will be described. FIG. **6** is a schematic diagram showing a relationship in the peeking prevention system **100,** when the first polarizing layer **10** disposed on the front side of the display device **10D** is viewed from a direction with an azimuth angle $\phi$ of 45° and an elevation angle $\theta_E$ of 45° through the second polarizing layer **20** disposed on a side of the light-transmitting portion **20W** facing the space **PSS,** between: their absorption axes **AX1** and **AX2;** and directions of the polarized light **PL1** and **PL2** used for displaying. FIG. **6** shows a plan view that is orthogonal to an oblique direction with an azimuth angle $\phi$ of 45° and an elevation angle $\theta_E$ of 45°. In FIG. **6,** when a smaller angle and a larger angle emerge as a result of the absorption axis **AX1** intersecting the absorption axis **AX2,** a direction bisecting the smaller angle defines a horizontal polarization axis **PXh,** and a direction bisecting the larger angle defines a vertical polarization axis **PXv.**

FIG. **7** is a diagram resulting from rotating FIG. **6** so that the positional relationship between the first polarizing layer **10** and the second polarizing layer **20** corresponds to the positional relationship between the rear polarizing layer **RPL** and the front polarizing layer **FPL** in the liquid crystal display device **LCD** of FIG. **3,** where the absorption axis **AX1** of the first polarizing layer **10** is disposed with its azimuth angle $\phi$ parallel to the 45° direction, as in FIG. **3.** Therefore, as shown in FIG. **5,** the absorption axis **AXr** of the rear polarizing layer **RPL** and the absorption axis **AXf** of the front polarizing layer **FPL** can be matched, respectively, to the absorption axis **AX1** of the first polarizing layer **10** and the absorption axis **AX2** of the second polarizing layer **20.**

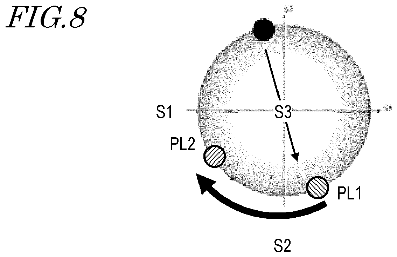

FIG. **8** is a diagram, by using the Poincaré sphere, explaining an optical compensation for preventing leakage of light when the display plane **10D** is viewed obliquely in the peeking prevention system **100,** corresponding to FIG. **4C.** As will be followed by simulation results below, using a phase film for preventing leakage of light at oblique viewing angles in the liquid crystal display device **LCD** above to convert the polarization axis of the polarized light **PL1** so as to rotate by 7.2° (i.e., twice as large as 3.6°) in the opposite direction can reduce the transmittance from 11.8% of the case where no phase film is used (see Comparative Example 1 in Table 2) to 5.7%(about 6%), but this still needs some improvement (see Example 0 in Table 2). The main reason why use of the aforementioned phase film allows the transmittance at oblique viewing angles to be reduced to essentially 0% in the liquid crystal display device **LCD,** but only to 5.7% in the peeking prevention system **100** is presumably that the layer planes of first polarizing layer **10** and the second polarizing layer **20** are orthogonal to each other in the peeking prevention system **100.** Note that a transmittance (when displaying by the display device **10D** is viewed through the light-transmitting portion **20W**) in the peeking prevention system **100** is defined against the transmittance of the case where the second polarizing layer **20** is not provided in the light-transmitting portion **20W** being 100%.

Through a simulation, configurations for the phase film for preventing leakage of light in the peeking prevention system **100** were studied. For the simulation, LCD Master 1D Scription by SHINTECH Co., Ltd. was used, and visual transmittance was determined for visible light in a wavelength range from 380 nm to 780 nm. The first polarizing layer **10** and the second polarizing layer **20** both had a transmittance of 43.1% and a degree of polarization of 99.99%. The angle made by the first polarizing layer **10** and the second polarizing layer **20** was 90°, and the second polarizing layer **20** was supposed to be formed on a glass substrate having a refractive index of 1.5. The polarizing layer **20** had an ordinary light refractive index of 1.5, and the angle $\theta b$ (see FIG. **5**) of the polarization axis of the polarized light **PL2** represents an angle within the glass substrate.

Upon studying various configurations, it was found that, as is schematically shown in FIG. **8,** a phase film suitable for use in the peeking prevention system **100** preferably has the polarization axis of the polarized light **PL1** rotated in the opposite direction by an angle which is 3 times as large or more and 10 times as large or less as $\theta a$ (e.g. 3.6°) (i.e., not less than 11.0° and not more than 35.0° when $\theta a$ is 3.6°), and more preferably rotated by 5 times as large or more and 8 times as large or less (i.e., not less than 17.0° and not more than 29.0° when $\theta a$ is 3.6°). Given Stokes parameters S1=-0.125, S2=0.992, S3=0.000 of the polarized light **PL1,** the Stokes parameters of the polarized light **PL2** are preferably in the range of (S1=0.255, S2=0.967, S3=0.000) to (S1=0.889, S2=0.457, S3=0.000), and more preferably in the range of (S1=0.451, S2=0.893, S3=0.000) to (S1=0.775, S2=0.632, S3=0.000).

Next, examples of specific configurations for a peeking prevention system according to an embodiment of the present invention will be described. The configuration of a peeking prevention system according to an embodiment of the present invention can be classified into five Types A to E, as characterized by: the azimuth angle $\phi$ (0° or 90°) of the absorption axis **AX1** of the first polarizing layer **10** and the absorption axis **AX2** of the second polarizing layer **20;** the azimuth angle $\phi$ of the slow axis **SX** of the phase film; in the case where the phase film includes a first phase layer and a second phase layer (the first phase layer being disposed closer to the polarizing layer than is the second phase layer), the azimuth angles ($\phi 1$, $\phi 2$) of the respective slow axes **SX1** and **SX2;** and the magnitudes of Re and Rth, the value of the Nz factor, and the wavelength dispersion (normal, anomalous, or flat) of each phase layer. Characteristic aspects of Types A to E are shown in Table 1. The preferable conditions for each type are based on the aforementioned simulation. Some of specific simulation results are exemplified in Table 2, and will be described below. Regarding wavelength dispersions of the phase layers in Table 1, those configurations which say anomalous dispersion or flat are meant to indicate that anomalous dispersion or flat is particularly preferable, although a phase

layer with normal dispersion is still usable. Those configurations whose wavelength dispersion is left blank have no preferable wavelength dispersions associated therewith in particular.

[Table 1]

| type of compensation | second phase layer | | | | first phase layer | | | |
|---|---|---|---|---|---|---|---|---|
| | wavelength dispersion | Re (nm) | Rth (nm) | Nz | wavelength dispersion | Re (nm) | Rth (nm) | Nz |
| A | - | - | - | - | anomalous or flat | 200 to 300 | | 10 to 2.0 |

(continued)

| type of compensation | second phase layer | | | | first phase layer | | | |
|---|---|---|---|---|---|---|---|---|
| | wavelength dispersion | Re (nm) | Rth (nm) | Nz | wavelength dispersion | Re (nm) | Rth (nm) | Nz |
| B | - | - | - | - | anomalous or flat | 200 to 300 | | 0.0 to -1.0 |
| C | anomalous or flat | | -200 to 300 | less than 1.5 | anomalous or flat | | 30 to 300 | 1.5 or more |
| D | anomalous or flat | | -200 to 200 | -0.5 or more (incl. +C) | anomalous or flat | | -30 to -300 | -0.5 or less (incl. +C) |
| E | | 150 to 350 | | (0 to 1.5) +1.0 to 4.0 | | 150 to 350 | | 0 to 1.5 |

Hereinafter, with reference to the drawings, characteristic aspects of the respective configurations of Types A to E will be described.

[Type A]

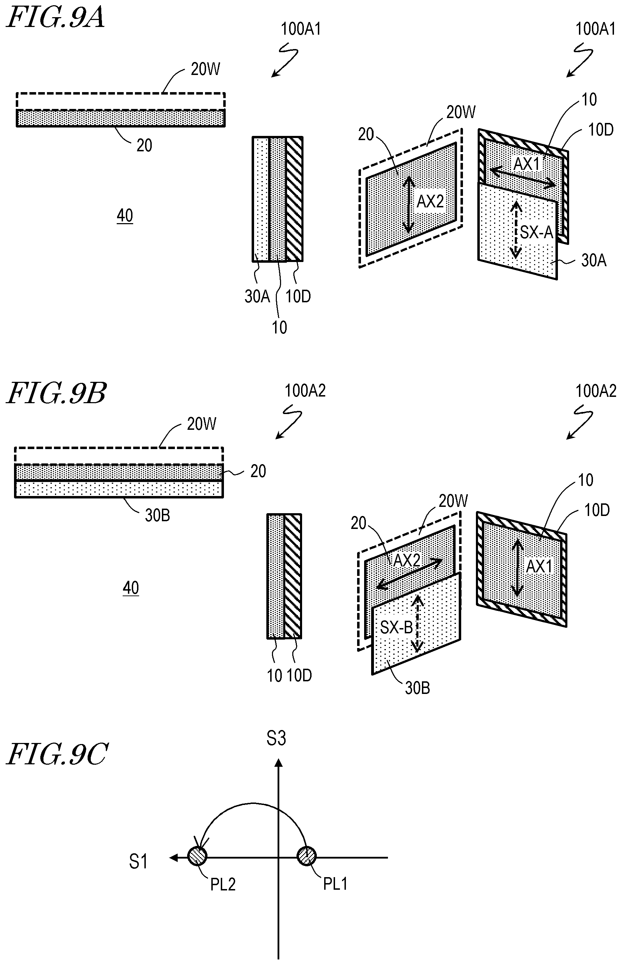

FIG. **9A** is a diagram schematically showing the positioning of a phase film in a peeking prevention system 100A1 of Type A, with a top view on the left and a perspective view on the right. FIG. **9B** is a diagram schematically showing the positioning of a phase film in a peeking prevention system **100A2** of Type A, with a top view on the left and a perspective view on the right. FIG. **9C** is a diagram, by using the Poincaré sphere, explaining the action of the phase film in the peeking prevention system **100A1.**
The peeking prevention system **100A1** of Type A shown in FIG. **9A** includes a phase film **30A** disposed on the first polarizing layer **10**. The absorption axis **AX1** of the first polarizing layer **10** is parallel to the horizontal direction, whereas the absorption axis **AX2** of the second polarizing layer **20** is parallel to the vertical direction. The slow axis **SX-A** of the phase film **30A** is parallel to the vertical direction, and orthogonal to the absorption axis **AX1**.
The peeking prevention system **100A2** of Type A shown in FIG. **9B** includes a phase film **30B** disposed on the second polarizing layer **20**. The absorption axis **AX1** of the first polarizing layer **10** is parallel to the vertical direction, whereas the absorption axis **AX2** of the second polarizing layer **20** is parallel to the horizontal direction. The slow axis **SX-B** of the phase film **30B** is parallel to the vertical direction, and orthogonal to the absorption axis **AX2**.
In the peeking prevention system **100A1,** as shown in FIG. **9C,** polarized light **PL1** having been transmitted through the first polarizing layer **10** is converted by the phase film **30A** into polarized light **PL2.**

[Type B]

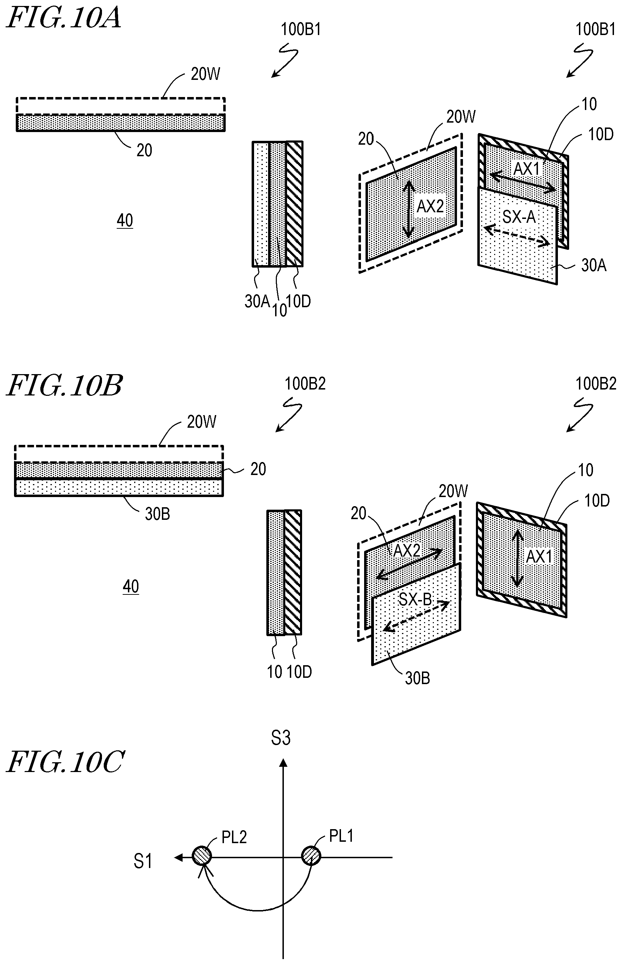

FIG. **10A** is a diagram schematically showing the positioning of a phase film in a peeking prevention system **100B1** of Type B, with a top view on the left and a perspective view on the right. FIG. **10B** is a diagram schematically showing the positioning of a phase film in a peeking prevention system **100B2** of Type B, with a top view on the left and a perspective view on the right. FIG. **10C** is a diagram, by using the Poincaré sphere, explaining the action of the phase film in the peeking prevention system **100B1.**
The peeking prevention system **100B1** of Type B shown in FIG. **10A** includes a phase film **30A** disposed on the first polarizing layer **10**. The absorption axis **AX1** of the first polarizing layer **10** is parallel to the horizontal direction, whereas the absorption axis **AX2** of the second polarizing layer **20** is parallel to the vertical direction. The slow axis **SX-A** of the phase film **30A** is parallel to the horizontal direction, and parallel to the absorption axis **AX1**.
The peeking prevention system **100B2** of Type B shown in FIG. **10B** includes a phase film **30B** disposed on the second polarizing layer **20**. The absorption axis **AX1** of the first polarizing layer **10** is parallel to the vertical direction, whereas the absorption axis **AX2** of the second polarizing layer **20** is parallel to the horizontal direction. The slow axis **SX-B** of the phase film **30B** is parallel to the horizontal direction and parallel to the absorption axis **AX2**.
In the peeking prevention system **100B1,** as shown in FIG. **10C,** polarized light **PL1** having been transmitted through the first polarizing layer **10** is converted by the phase film **30B** into polarized light **PL2.**

[Type C]

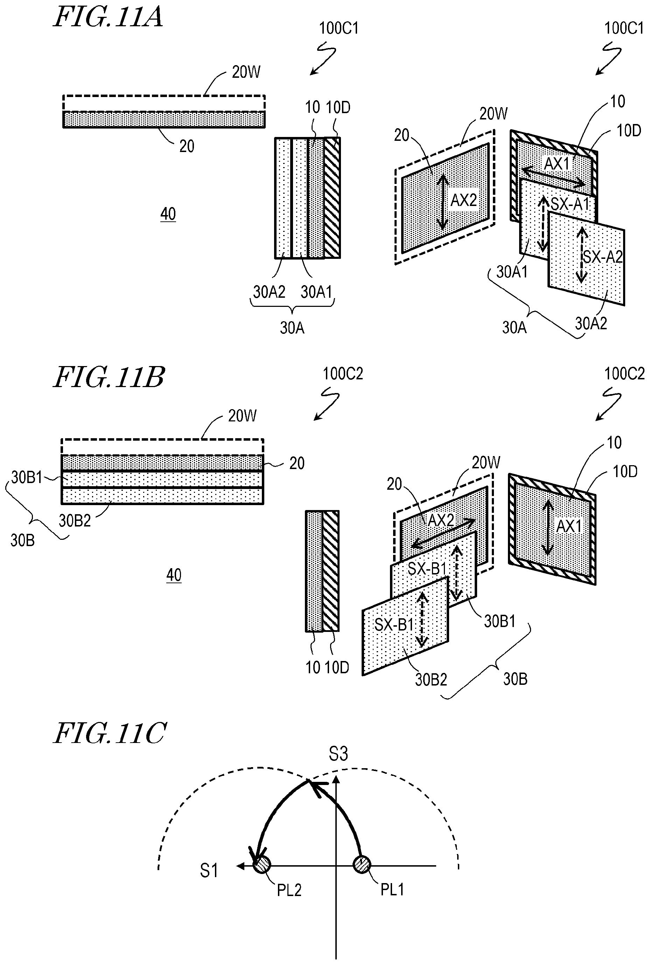

FIG. **11A** is a diagram schematically showing the positioning of a phase film in a peeking prevention system **100C1** of Type C, with a top view on the left and a perspective view on the right. FIG. **11B** is a diagram schematically showing the positioning of a phase film in a peeking prevention system **100C2** of Type C, with a top view on the left and a perspective view on the right. FIG. **11C** is a diagram, by using the Poincaré sphere, explaining the action of the phase film in the peeking prevention system **100C1.**

The peeking prevention system **100C1** of Type C shown in FIG. **11A** includes a phase film **30A** disposed on the first polarizing layer **10,** the phase film **30A** including a first phase layer **30A1** and a second phase layer **30A2.** The absorption axis **AX1** of the first polarizing layer **10** is parallel to the horizontal direction, whereas the absorption axis **AX2** of the second polarizing layer **20** is parallel to the vertical direction. The slow axes **SX-A1** and **SX-A2** of the first and second phase layers **30A1** and **30A2** are both parallel to the vertical direction, and orthogonal to the absorption axis **AX1.**

The peeking prevention system **100C2** of Type C shown in FIG. **11B** includes a phase film **30B** disposed on the second polarizing layer **20,** the phase film **30B** including a first phase layer **30B1** and a second phase layer **30B2.** The absorption axis **AX1** of the first polarizing layer **10** is parallel to the vertical direction, whereas the absorption axis **AX2** of the second polarizing layer **20** is parallel to the horizontal direction. The slow axes **SX-B1** and **SX-B2** of the first and second phase layers **30B1** and **30B2** are both parallel to the vertical direction, and orthogonal to the absorption axis **AX2.**

In the peeking prevention system **100C1,** as shown in FIG. **11C,** polarized light **PL1** having been transmitted through the first polarizing layer **10** is converted by the phase film **30A** into polarized light **PL2.**

[Type D]

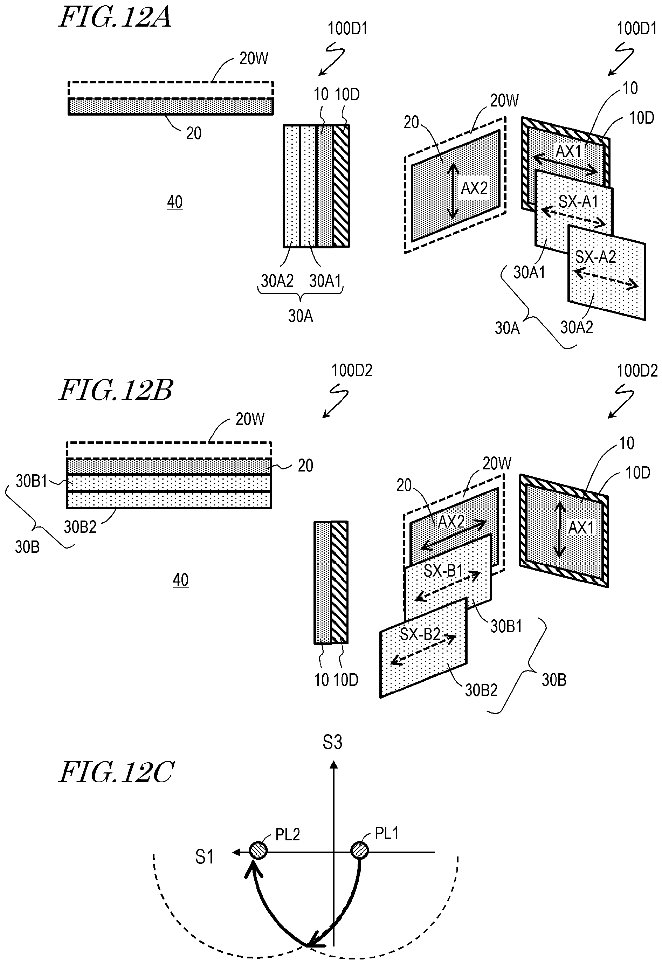

FIG. **12A** is a diagram schematically showing the positioning of a phase film in a peeking prevention system **100D1** of Type D, with a top view on the left and a perspective view on the right. FIG. **12B** is a diagram schematically showing the positioning of a phase film in a peeking prevention system **100D2** of Type D, with a top view on the left and a perspective view on the right. FIG. **12C** is a diagram, by using the Poincaré sphere, explaining the action of the phase film in the peeking prevention system **100D1.**

The peeking prevention system **100D1** of Type D shown in FIG. **12A** includes a phase film **30A** disposed on the first polarizing layer **10,** the phase film **30A** including a first phase layer **30A1** and a second phase layer **30A2.** The absorption axis **AX1** of the first polarizing layer **10** is parallel to the horizontal direction, whereas the absorption axis **AX2** of the second polarizing layer **20** is parallel to the vertical direction. The slow axes **SX-A1** and **SX-A2** of the first and second phase layers **30A1** and **30A2** are both parallel to the horizontal direction and parallel to the absorption axis **AX1.**

The peeking prevention system **100D2** of Type D shown in FIG. **12B** includes a phase film **30B** disposed on the second polarizing layer **20,** the phase film **30B** including a first phase layer **30B1** and a second phase layer **30B2.** The absorption axis **AX1** of the first polarizing layer **10** is parallel to the vertical direction, whereas the absorption axis **AX2** of the second polarizing layer **20** is parallel to the horizontal direction. The slow axes **SX-B1** and **SX-B2** of the first and second phase layers **30B1** and **30B2** are both parallel to the horizontal direction and orthogonal to the absorption axis **AX1.**

In the peeking prevention system **100D1,** as shown in FIG. **12C,** polarized light **PL1** having been transmitted through the first polarizing layer **10** is converted by the phase film **30B** into polarized light **PL2.**

[Type E]

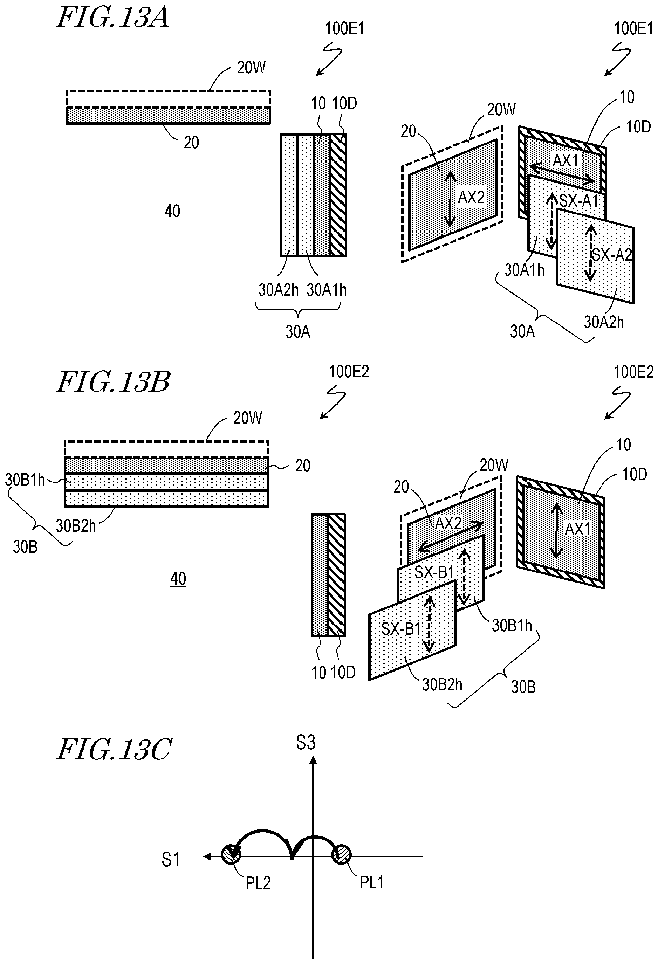

FIG. **13A** is a diagram schematically showing the positioning of a phase film in a peeking prevention system **100E1** of Type E, with a top view on the left and a perspective view on the right. FIG. **13B** is a diagram schematically showing the positioning of a phase film in a peeking prevention system **100E2** of Type E, with a top view on the left and a perspective view on the right. FIG. **13C** is a diagram, by using the Poincaré sphere, explaining the action of the phase film in the peeking prevention system **100E1.**

The peeking prevention system **100E1** of Type E shown in FIG. **13A** includes a phase film **30A** disposed on the first polarizing layer **10,** the phase film **30A** including a first phase layer **30A1h** and a second phase layer **30A2h.** The absorption axis **AX1** of the first polarizing layer **10** is parallel to the horizontal direction, whereas the absorption axis **AX2** of the second polarizing layer **20** is parallel to the vertical direction. The slow axes **SX-A1** and **SX-A2** of the first and second phase layers **30A1h** and **30A2h** are both parallel to the vertical direction, and orthogonal to the absorption axis **AX1.** Instead of the first phase layer **30A1** and the second phase layer **30A2** of the peeking prevention system (see FIG. **11A** and FIG. **11B**) of Type C, Type E includes the first phase layer **30A1h** and the second phase layer **30A2h,** which are 1/2 wavelength plates. Note that, as shown in Table 1, the Nz value of the second phase layer **30A2h** is preferably within a range resulting from adding 1.0 to 4.0 to the Nz values (0 to 1.5) of the first phase layer **30A1h,** i.e., a range of 1.0 to 5.5.

The peeking prevention system **100E2** of Type E shown in FIG. **13B** includes a phase film **30B** disposed on the second polarizing layer **20,** the phase film **30B** including a first phase layer **30B1h** and a second phase layer **30B2h.** The absorption axis **AX1** of the first polarizing layer **10** is parallel to the vertical direction, whereas the absorption axis **AX2** of the second polarizing layer **20** is parallel to the horizontal direction. The slow axes **SX-B1** and **SX-B2** of the first and second phase layers **30B1h** and **30B2h** are both parallel to the vertical direction, and orthogonal to the absorption axis **AX2.**

In the peeking prevention system **100E1,** as shown in FIG. **13C,** polarized light **PL1** having been transmitted through the first polarizing layer **10** is converted by the phase film **30A** into polarized light **PL2.**

Some of the results of simulations performed for the specific examples of a peeking prevention system according to an embodiment of the present invention are shown in Table 2. As Comparative Example 1, Table 2 also shows a result for the case of not performing compensation by a phase film. Also, shown as Example 0 is an example of employing the phase film which was used for preventing leakage of light in the liquid crystal display device described with reference to FIG. **4C.** Examples 1 to 23 all provide better effects of preventing leakage of light than those of Example 0, such that the transmittance can be made 3% or less.

[Table 2]

| | type of compensation | second phase layer | | | | | first phase layer | | | | | polarization analysis result | | | | transmittance (%) |
|---|---|---|---|---|---|---|---|---|---|---|---|---|---|---|---|---|
| | | wavelength dispersion | Re (nm) | Rth (nm) | Nz | φ2 (°) | wavelength dispersion | Re (nm) | Rth (nm) | Nz | φ1 (°) | S1 | S2 | S3 | θb (°) | |
| COMPARATIVE EXAMPLE1 | none | - | - | - | - | - | - | - | - | - | - | -0.125 | 0.992 | 0.000 | 48.6 | 11.8 |
| EXAMPLE 0 | LCD | - | - | - | - | - | normal | 270 | 135 | 0.5 | 90 | 0.124 | 0.992 | -0.007 | 41.4 | 5.7 |
| EXAMPLE 1 | A | - | - | - | - | - | normal | 270 | 270 | 1.0 | 90 | 0.367 | 0.930 | 0.001 | 34.2 | 1.7 |
| EXAMPLE 2 | A | - | - | - | - | - | normal | 260 | 390 | 1.5 | 90 | 0.581 | 0.814 | 0.029 | 27.2 | 0.3 |
| EXAMPLE 3 | E | normal | 260 | 390 | 1.5 | 90 | normal | 270 | 135 | 0.5 | 90 | 0.363 | 0.932 | 0.003 | 34.4 | 1.9 |
| EXAMPLE 4 | E | normal | 250 | 500 | 2.0 | 90 | normal | 270 | 135 | 0.5 | 90 | 0.567 | 0.823 | 0.014 | 27.7 | 0.2 |
| EXAMPLE 5 | E | normal | 220 | 660 | 3.0 | 90 | normal | 270 | 270 | 1.0 | 90 | 0.688 | 0.726 | 0.023 | 23.3 | 0.1 |
| EXAMPLE 6 | C | normal | 65 | 65 | 1.0 | 90 | normal | 50 | 248 | 5.0 | 90 | 0.761 | 0.648 | 0.038 | 20.2 | 0.7 |
| EXAMPLE 7 | C | normal | 100 | 100 | 1.0 | 90 | normal | 0 | 100 | +∞(-C) | - | 0.485 | 0.874 | -0.008 | 30.5 | 0.5 |
| EXAMPLE 8 | C | normal | 70 | 70 | 1.0 | 90 | normal | 42 | 104 | 2.5 | 90 | 0.464 | 0.878 | 0.122 | 31.1 | 0.9 |
| EXAMPLE 9 | C | normal | 43 | 43 | 1.0 | 90 | normal | 57 | 228 | 4.0 | 90 | 0.633 | 0.703 | 0.324 | 24.0 | 2.1 |
| EXAMPLE 10 | B | normal | - | - | . | - | normal | 270 | 0 | 0.0 | 0 | 0.365 | 0.926 | 0.093 | 34.2 | 1.7 |
| EXAMPLE 11 | D | normal | 180 | -90 | 0.0 | 90 | normal | 0 | -100 | -∞(+C) | - | 0.476 | 0.876 | -0.077 | 30.8 | 0.9 |
| EXAMPLE 12 | E | normal | 260 | 520 | 2.0 | 90 | normal | 270 | 135 | 0.5 | 90 | 0.567 | 0.823 | -0.015 | 27.7 | 0.2 |
| EXAMPLE 13 | E | normal | 250 | 625 | 2.5 | 90 | normal | 270 | 135 | 0.5 | 90 | 0.729 | 0.684 | -0.027 | 21.6 | 0.4 |
| EXAMPLE 14 | E | normal | 250 | 625 | 2.5 | 90 | normal | 270 | 270 | 1.0 | 90 | 0.536 | 0.844 | -0.014 | 28.8 | 0.3 |
| EXAMPLE 15 | E | normal | 230 | 460 | 2.0 | 90 | normal | 170 | 85 | 0.5 | 90 | 0.646 | 0.764 | 0.008 | 24.9 | 0.1 |
| EXAMPLE 16 | E | normal | 230 | 460 | 2.0 | 90 | normal | 190 | 95 | 0.5 | 90 | 0.624 | 0.781 | 0.003 | 25.7 | 0.1 |
| EXAMPLE 17 | C | normal | 95 | 95 | 1.0 | 90 | normal | 57 | 228 | 4.0 | 90 | 0.588 | 0.709 | -0.391 | 25.2 | 3.1 |
| EXAMPLE 18 | E | normal | 180 | 360 | 2.0 | 90 | normal | 270 | 135 | 0.5 | 90 | 0.480 | 0.857 | 0.187 | 30.4 | 1.4 |
| EXAMPLE 19 | C | normal | 75 | 75 | 1.0 | 90 | normal | 0 | 100 | +∞(-C) | - | 0.480 | 0.881 | 0.196 | 32.0 | 1.5 |

(continued)

| | type of compen-sation | second phase layer | | | | | first phase layer | | | | | polarization analysis result | | | | transmittance (%) |
|---|---|---|---|---|---|---|---|---|---|---|---|---|---|---|---|---|
| | | wavelength dispersion | Re (nm) | Rth (nm) | Nz | φ2 (°) | wavelength dispersion | Re (nm) | Rth (nm) | Nz | φ1 (°) | S1 | S2 | S3 | θb (°) | |
| EXAMPLE 20 | C | normal | 110 | 110 | 1.0 | 90 | normal | 0 | 200 | +∞ (-C) | - | 0.594 | 0.741 | -0.314 | 25.6 | 2.2 |
| EXAMPLE 21 | C | normal | 60 | 60 | 1.0 | 90 | normal | 0 | 200 | +∞ (-C) | - | 0.586 | 0.742 | 0.326 | 25.8 | 2.1 |
| EXAMPLE 22 | C | normal | 80 | 80 | 1.0 | 90 | normal | 0 | 50 | +∞ (-C) | - | 0.322 | 0.926 | 0.200 | 35.4 | 2.7 |
| EXAMPLE 23 | E | normal | 270 | 1080 | 4.0 | 90 | normal | 270 | 270 | 1.0 | 90 | 0.763 | 0.573 | 0.299 | 18.4 | 2.7 |

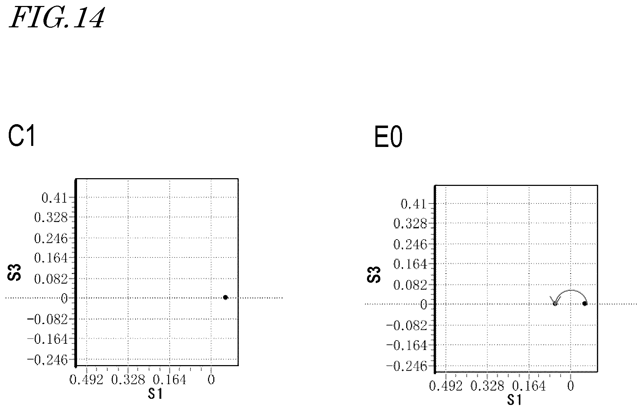

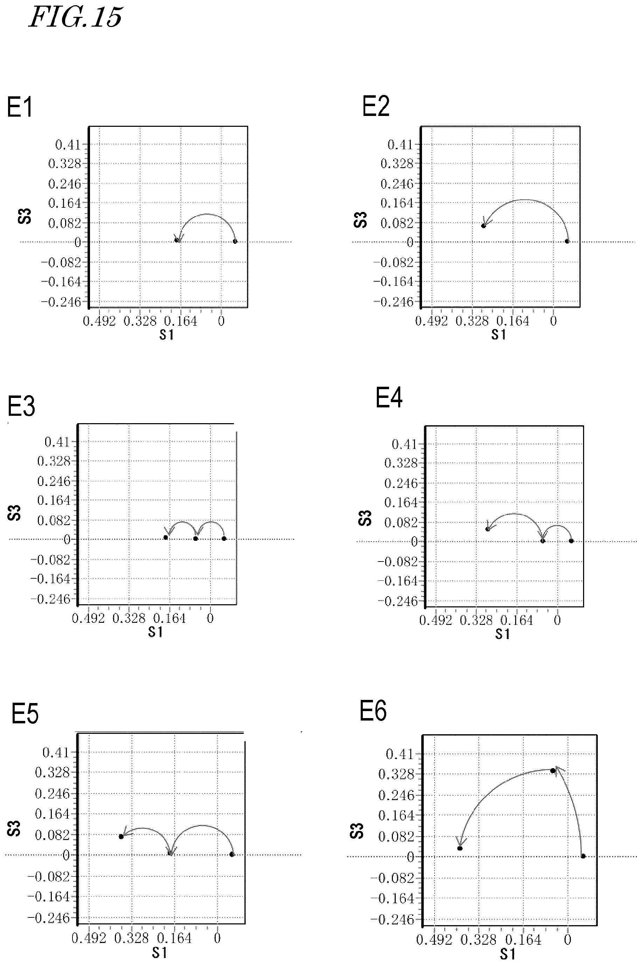

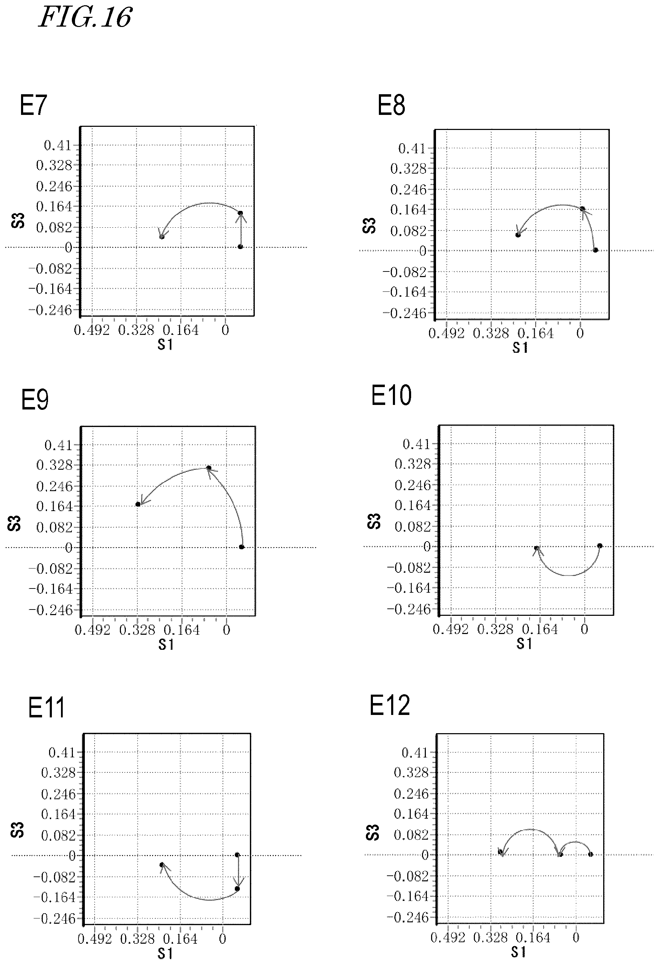

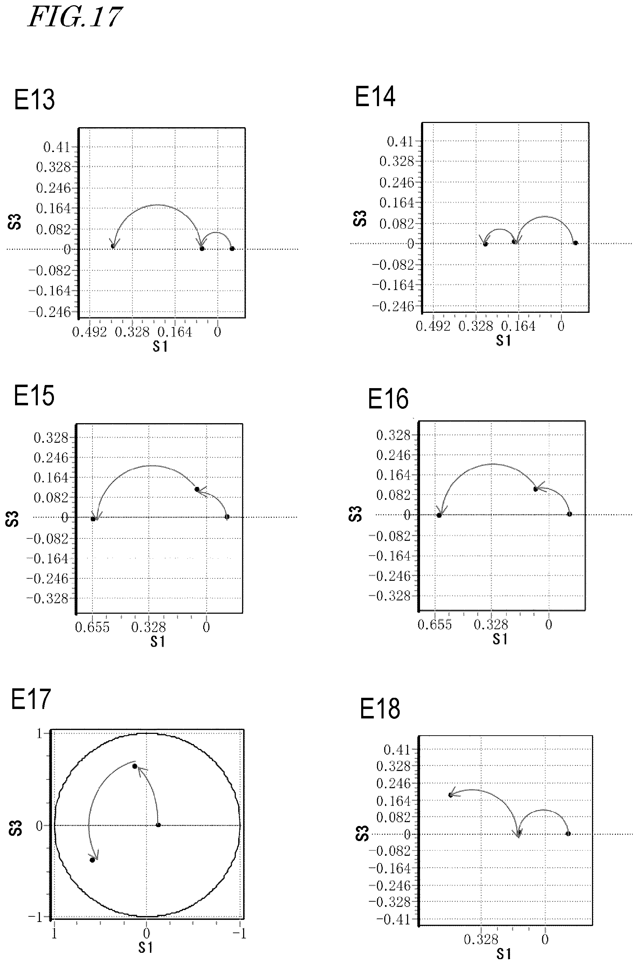

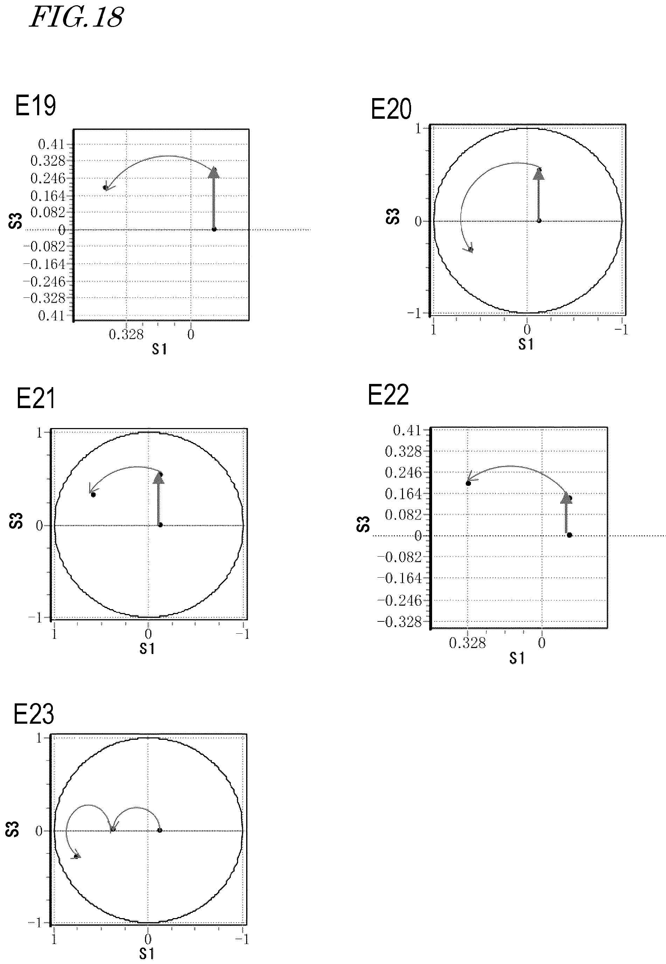

FIG. 14 shows a diagram explaining the polarization state in Comparative Example 1, and FIG. 15 to FIG. 18 show diagrams explaining the action of the phase film in Example 0 and Example 1 to Example 23 by using the Poincaré sphere. In examples where the phase film includes a first phase layer and a second phase layer, arrows are used to indicate their respective actions.

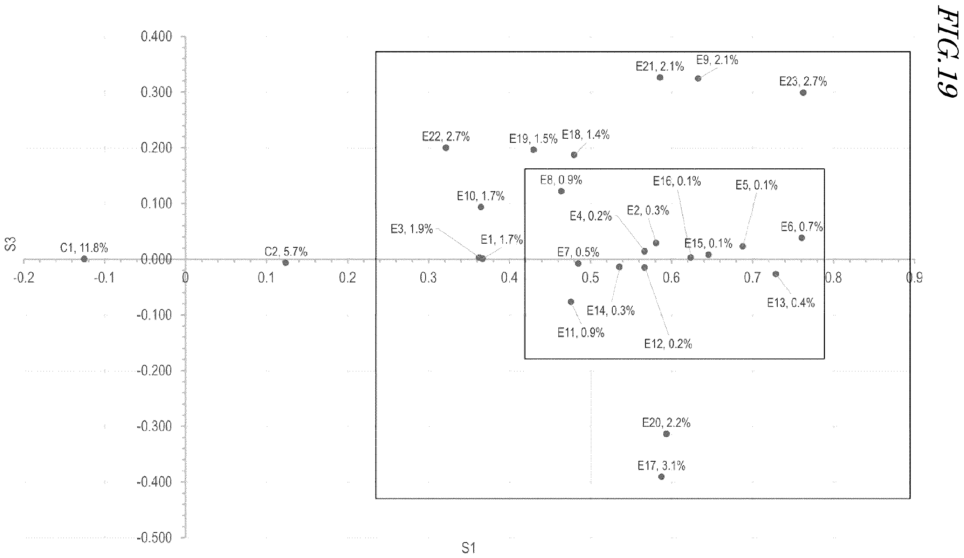

FIG. **19** shows transmittance values determined through simulations shown in Table 2, on a map of Stokes parameters S1-S3 for polarized light compensated by the phase film. As can be seen from FIG. **19,** in the ranges of 0.25<S1<0.9 and -0.4<S3<0.4, the transmittance can be made 3% or less. Furthermore, in the ranges 0.45<S1<0.78 and -0.15<S3<0.15, the transmittance can be made 1% or less.

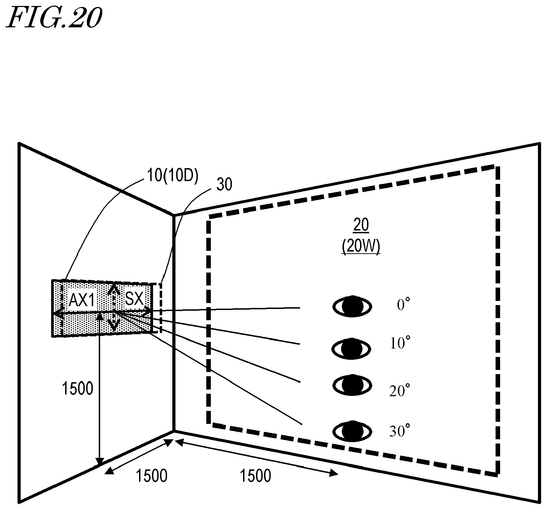

Discussed next are results of prototyping a system corresponding to the peeking prevention system **100C1** shown in FIG. **11A,** and as shown in FIG. **20,** measuring transmittances in directions inclined by 10°, 20° and 30° downward from a horizontal plane that is perpendicular to the center of the display plane **10D** (i.e., at angles of elevation $\theta_E$ of -10°, -20° and -30°), given an azimuth angle $\phi$ in the -45° direction, together with the aforementioned simulation results.

In Table 3, "Reference" corresponds to using no phase film. Experimental Example 1 used a first phase layer (Re: 65 nm, Nz factor: 3.8) and a second phase layer (Re: 85 nm, Nz factor: 1.0) (corresponding to Example 9 in Table 2). Experimental Example 2 used a first phase layer (Re: 52 nm, -Nz factor: 2.4) and a second phase layer (Re: 140 nm -Nz factor: 1.0) (corresponding to Example 8 in Table 2). As the phase layer, a phase film made of a cyclo olefin (ZeonorFilm (registered trademark) manufactured by Nippon ZEON Co., Ltd.) was used in every case. As the first polarizing layer 10 and the second polarizing layer **20,** polarizing plates of an acrylic resin (manufactured by Nitto Denko Corporation) having a transmittance of 43.2% and a degree of polarization of 99.99% was used in every case. It will be appreciated that the phase layers and polarizing layers to be used for embodiments of the present invention are not limited to these, and known phase layers and polarizing layers can be used. A polarizing layer and a phase layer, or two phase layers, are to be attached together by using an optical adhesive or an optical tackiness agent. Alternatively, a polarizing layer and a phase layer may be directly stacked without using any adhesive/tackiness agent. Furthermore, as necessary, a protection layer (e.g., a TAC layer) may be provided. The retardation of a phase film is inclusive of the retardations of an adhesion layer and a protection layer.

[Table 3]

| | relative transmittance (%) | | | | | |
|---|---|---|---|---|---|---|
| | $\theta$ E=-10° | | $\theta$ E=-20° | | $\theta$ E=-30° | |
| | calculated | measured | calculated | measured | calculated | measured |
| Reference | 2.0 | 2.0 | 7.7 | 6.5 | 15.7 | 14.9 |
| Experimental Ex. 1 | 0.4 | 0.6 | 1.3 | 3.6 | 2.0 | 4.5 |
| Experimental Ex. 2 | 0.08 | 0.12 | 0.09 | 0.5 | 0.2 | 0.4 |

As can be seen from the results in Table 3, simulation results well match the actually measured values. It can also be seen that, a peeking prevention system according to an embodiment of the present invention can prevent peeking from oblique viewing angles highly accurately.

In the peeking prevention systems according to embodiments of the present invention described above, a display device including a first polarizing layer on a front side of a display plane, the first polarizing layer having a first absorption axis that is parallel to a first direction, was exemplified by: a liquid crystal display device that includes a polarizing layer having an absorption axis in the horizontal direction (or the vertical direction). However, this is not a limitation. For example, an LED display device (including a micro LED display device) or an organic EL display device performs displaying by using unpolarized light. Also, liquid crystal display devices are known in which a 1/4 wavelength plate or a phase layer having a large retardation is disposed further outside of the polarizing layer on the front side, so that displaying will be seen even through polarizing sunglasses. In the case of using a display device such that the light which is emitted from the display device itself is unpolarized light or circularly polarized light, the first polarizing layer may be provided on the front side of the display device. The direction of the absorption axis of the first polarizing layer is preferably parallel to the horizontal direction or the vertical direction, and is particularly preferably parallel to the horizontal direction.

Furthermore, a phase layer having a frontal retardation of 4000 nm or more may further be disposed between the display plane and the first polarizing layer, in the case of using: a liquid crystal display device, such as a TN mode liquid crystal display device, in which the direction of the absorption axis of a polarizing layer that is disposed on the front side of the display plane is greatly offset from the horizontal direction or the vertical direction (in the case of a TN mode liquid crystal display device, the azimuth angle is 45° or 135°); or a display device in which a circular polarizing plate is disposed on the front side of the display plane in order to suppress a decrease in visual recognition due to external light (e.g., an organic EL display device), such that the absorption axis of the polarizing layer has an uncertain (i.e., unknown to the user) orientation. A phase layer having such an extremely large frontal retardation acts to depolarize light. For example, even if linearly polarized light with a degree of polarization of 99% or more is incident, after it passes through such a phase layer, its degree of polarization may become 1% or less. The light which has been depolarized (unpolarized light) is converted by the first polarizing layer into polarized light of a predetermined polarization direction. Therefore, this is usable as the aforementioned peeking prevention system.

As a phase layer having a frontal retardation of 4000 nm or more, for example, a phase film described in Japanese Patent No. 3105374 or Japanese Laid-Open Patent Publication No. 2011-107198 can be used. Although not particularly limited, the upper limit value of the frontal retardation may be e.g. 30000 nm. While exceeding this does not affect depolarization effect, it may reduce manufacturing yield. A configuration using such a phase layer is described in Japanese Patent Application No. 2020-064553, filed on the same day as the present application. The entire disclosure of Japanese Patent Application No. 2020-064553 is incorporated herein by reference.

As described above, according to an embodiment of the present invention, a peeking prevention system and a method of peeking prevention using the same that can prevent peeking from oblique directions are provided. In a peeking prevention system according to the present embodiment, the phase film **30** may be provided on the polarizing layer **10** (phase film **30A**), or on the polarizing layer **20** (phase film **30B**). In the case where the phase film **30B** is provided on the polarizing layer **20,** a window piece for use in a peeking prevention system is provided. The window piece includes: a polarizing layer **20** disposed on the room side of a transparent substrate (not shown), the polarizing layer **20** having an absorption axis that is parallel to the vertical direction or the horizontal direction; and a phase film 30 disposed on the room side of the polarizing layer **20**. In a plan view of an imaginary plane (corresponding to the display plane **10D**) located inside the room as viewed along a line-of-sight direction from outside of the room, when linearly polarized light having a polarization axis that is orthogonal to a horizontal line segment or a vertical line segment on the imaginary plane propagates in a direction with an angle $\theta$ (corresponding to the angle $\theta a$ in FIG. **5**) greater than 0° emerging between the polarization axis and the absorption axis, the phase film **30** has a birefringence to convert a polarization state of the linearly polarized light so that the polarization axis rotates beyond the absorption axis. The angle by which the polarization axis rotates beyond the absorption axis is preferably the angle $\theta b$ in the above description.

## INDUSTRIAL APPLICABILITY

With a peeking prevention system, a method of peeking prevention, and a window piece for use therewith according to an embodiment of the present invention, oblique peeking can be prevented highly accurately.

## REFERENCE SIGNS LIST

10: first polarizing layer, **10D:** display device, display plane
20: second polarizing layer, **20W:** light-transmitting portion (window)
30: phase film
100: peeking prevention system

## Claims

1. A peeking prevention system comprising:

    a display device including a first polarizing layer on a front side of a display plane, the first polarizing layer having a first absorption axis that is parallel to a first direction; and
    a partition to delimit from surroundings a space in which displaying is to be provided by the display device, the partition having a light-transmitting portion through which the inside of the space is viewable,
    the light-transmitting portion including a transparent substrate and a second polarizing layer being disposed on a side of the transparent substrate facing the space and having a second absorption axis that is parallel to a second direction, wherein,
    the system further comprises a phase film disposed on a front side of the first polarizing layer or a side of the second polarizing layer facing the space;
    the phase film has a slow axis that is orthogonal to the first direction or parallel to a third direction, the third direction being parallel to the second direction; and
the display plane has an azimuth angle of 45°, and reduces a transmittance of a case where the display plane is viewed through the light-transmitting portion from an oblique direction with an elevation angle of 45°.

2. The peeking prevention system of claim 1, wherein,

in a plan view that is orthogonal to the oblique direction, when a smaller angle and a larger angle emerge as a result of the first absorption axis intersecting the second absorption axis, a direction bisecting the smaller angle defines a horizontal polarization axis and a direction bisecting the larger angle defines a vertical polarization axis, Stokes parameters S1 and S3, defining a polarization state of linearly polarized light having been emitted from the display plane and transmitted through the phase film but before being incident on the second polarizing layer, satisfy the relationships:

$$0.25 < S1 < 0.9;$$

and

$$-0.4 < S3 < 0.4.$$

3. The peeking prevention system of claim 1 or 2, wherein a frontal retardation Re that is defined by a product between a thickness and (nx-ny) of the phase film is not less than 200 nm and not more than 300 nm, and an Nz factor defined by (nx-nz)/(nx-ny) of the phase film is not less than -1.0 and not more than 2.0.

4. The peeking prevention system of claim 1 or 2, wherein the phase film includes a plurality of phase layers.

5. The peeking prevention system of any of claims 1 to 4, wherein one of the first direction and the second direction is the horizontal direction, and the other is the vertical direction.

6. The peeking prevention system of claim 5, wherein the first direction is the horizontal direction and the phase film is disposed on the front side of the first polarizing layer.

7. The peeking prevention system of claim 5, wherein the second direction is the horizontal direction, and the phase film is disposed on the side of the second polarizing layer facing the space.

8. The peeking prevention system of any of claims 1 to 7, wherein,

the display plane and the light-transmitting portion are parallel to the vertical direction; and
an angle made by the display plane and the light-transmitting portion is not less than 30° and not more than 150°.

9. The peeking prevention system any of claims 1 to 8, wherein the transmittance is 6% or less.

10. The peeking prevention system any of claims 1 to 9, wherein the transmittance is 3% or less.

11. A window piece to be provided on a wall of a room, the window piece comprising:

a transparent substrate;
a polarizing layer being disposed on a side of the transparent substrate facing the room, the polarizing layer having an absorption axis that is parallel to the vertical direction or the horizontal direction; and
a phase film disposed on a side of the polarizing layer facing the room, wherein,
in a plan view of an imaginary plane located inside the room as viewed along a line-of-sight direction from outside of the room, when linearly polarized light having a polarization axis that is orthogonal to a horizontal line segment (or a vertical line segment) on the imaginary plane propagates in a direction with an angle $\theta$ greater than 0° emerging between the polarization axis and the absorption axis, the phase film has a birefringence to convert a polarization state of the linearly polarized light so that the polarization axis rotates beyond the absorption axis.

12. The window piece of claim 11, wherein an angle by which the phase film rotates the polarization axis of the linearly polarized light beyond the absorption axis is 3 times as large or more and 10 times as large or less than the angle $\theta$.

13. The window piece of claim 11 or 12, wherein,

the line-of-sight direction has an incident angle of 45° with respect to the imaginary plane, with a plane of incidence intersecting the horizontal plane at an angle of 45°,
in a plan view that is orthogonal to the line-of-sight direction, when a smaller angle and a larger angle emerge as a result of the absorption axis intersecting the horizontal line segment, a direction bisecting the smaller angle defines a horizontal polarization axis and a direction bisecting the larger angle defines a vertical polarization axis, Stokes parameters S1 and S3, defining a polarization state of the linearly polarized light having been transmitted through the phase film but before being incident on the polarizing layer, satisfy the relationships:

$$0.25 < S1 < 0.9;$$

and

$$-0.4 < S3 < 0.4.$$

14. A method of peeking prevention comprising:

disposing a display device including a first polarizing layer on a front side of a display plane, the first polarizing layer having a first absorption axis that is parallel to a first direction;
disposing a partition to delimit from surroundings a space in which displaying is to be provided by the display device, the partition having a light-transmitting portion through which the inside of the space is viewable, the light-transmitting portion including a transparent substrate and a second polarizing layer being disposed on a side of the transparent substrate facing the space and having a second absorption axis that is parallel to a second direction; and
disposing a phase film at a front side of the first polarizing layer or a side of the second polarizing layer facing the space, the phase film having a slow axis that is orthogonal to the first direction or parallel to a third direction that is parallel to the second direction, thereby reducing a transmittance of a case where the display plane is viewed through the light-transmitting portion from an oblique direction with an elevation angle of 45° when the display plane has an azimuth angle of 45°.

FIG.1

*FIG.2*

*FIG.3*

*FIG.4A*

*FIG.4B*

*FIG.4C*

*FIG.5*

*FIG.6*

10(10D)

(AX2)

PXh    PL1

AX1    PXv

PL2    20
(20W)

40    AX2

*FIG.7*

40

AX2    PL2

20
(20W)    10(10D)

PXh

AX1    (AX2)

PXv    PL1

*FIG.8*

*FIG.9A*

100A1

20W

20

40

30A  10D

10

100A1

10

10D

20W

20

AX1

AX2

SX-A

30A

10

*FIG.9B*

100A2

20W

20

30B

40

100A2

10

10D

20W

20

AX2

AX1

SX-B

30B

10 10D

*FIG.9C*

S3

S1

PL2

PL1

*FIG.10A*

20W

20

40

100B1

100B1

30A 10 10D

20W

20

AX2

10

10D

AX1

SX-A

30A

*FIG.10B*

20W

20

30B

40

100B2

100B2

10 10D

20W

20

AX2

SX-B

30B

10

10D

AX1

*FIG.10C*

S3

PL2

PL1

S1

*FIG.11A*

100C1

100C1

20W

20

40

10 10D

30A2 30A1

30A

20

20W

10

10D

AX1

SX-A1

AX2

SX-A2

30A1

30A

30A2

*FIG.11B*

100C2

100C2

20W

30B1

20

30B2

30B

40

10 10D

20

20W

10

10D

AX2

AX1

SX-B1

SX-B1

30B1

SX-B1

SX-B2

30B2

30B

*FIG.11C*

S3

S1

PL2

PL1

*FIG.12A*

20W

100D1

100D1

10 10D

10

20

10D

40

20W

AX1

20

20W

AX2

SX-A1

30A1

30A2

30A1

SX-A2

30A2

30A

30A

*FIG.12B*

100D2

100D2

20W

10

30B1

20

10D

30B2

30B

20

20W

AX2

40

20

AX1

10 10D

SX-B1

30B1

30B

SX-B2

30B2

10 10D

*FIG.12C*

S3

S1

PL2

PL1

*FIG.13A*

*FIG.13B*

*FIG.13C*

*FIG.14*

C1

E0

*FIG.15*

## FIG.16

E7

E8

E9

E10

E11

E12

*FIG.17*

E13

E14

E15

E16

E17

E18

## FIG.18

E19

E20

E21

E22

E23

## FIG.19

*FIG.20*

10(10D)
30
20
(20W)

AX1  SX

0°
10°
20°
30°

1500

1500  1500

**INTERNATIONAL SEARCH REPORT**

| | International application No. |
|---|---|
| | PCT/JP2021/013051 |

**A. CLASSIFICATION OF SUBJECT MATTER**
Int. Cl. G02B5/30(2006.01)i, G02F1/1335(2006.01)i, G02F1/13363(2006.01)i, G02B27/28(2006.01)i
FI: G02B5/30, G02F1/13363, G02F1/1335 510, G02B27/28 Z
According to International Patent Classification (IPC) or to both national classification and IPC

**B. FIELDS SEARCHED**

Minimum documentation searched (classification system followed by classification symbols)
Int. Cl. G02B5/30, G02F1/1335, G02F1/13363, G02B27/28

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-45834 A (DAINIPPON PRINTING CO., LTD.) 22 | 1-14 |
| Y | March 2019, paragraphs [0001], [0002]-[0005], [0018], [0021]-[0118], fig. 1-19, paragraphs [0001], [0002]-[0005], [0018], [0021]-[0118], fig. 1-19 | 1-14 |
| Y | US 2015/0247962 A1 (STEELCASE INC.) 03 September 2015, paragraphs [0154]-[0156], fig. 26, 26A-26D | 1-14 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17.05.2021 | 01.06.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2021/013051

| Patent Documents referred to in the Report | Publication Date | Patent Family | Publication Date |
|---|---|---|---|
| JP 2019-45834 A | 22.03.2019 | (Family: none) | |
| US 2015/0247962 A1 | 03.09.2015 | US 2014/0222206 A1<br>US 2017/0082865 A1<br>US 2018/0107014 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9885876 B
- JP 3105374 B
- JP 2011107198 A
- JP 2020064553 A